# EUROPÄISCHE PATENTSCHRIFT

(11) **EP 1 335 225 B1**
(45) Veröffentlichungstag und Bekanntmachung des Hinweises auf die Patenterteilung: **29.11.2006**
(21) Anmeldenummer: 02002753.8
(22) Anmeldetag: 07.02.2002
(51) Int. Cl.: G02B 7/02, G02B 23/24

(54) **Abstandshalter für Linsensystem**
Spacer for lens system
Dispositif d'écartement pour système de lentilles

(43) Veröffentlichungstag der Anmeldung: 13.08.2003
(73) Patentinhaber: Karl Storz GmbH & Co. KG, 78532 Tuttlingen (DE)
(72) Erfinder: Rudischhauser, Jürgen, D-78532 Tuttlingen (DE); Renner, Klaus, D-78576 Liptingen (DE); Kupferschmid, Markus, D-78576 Emmingen-Liptingen (DE)
(74) Vertreter: Fugmann, Winfried

(56) Entgegenhaltungen:
- DE-A- 3 431 631
- US-A- 4 303 306
- US-A- 5 999 344
- US-B1- 6 201 649

## Beschreibung

Die Erfindung bezieht sich auf einen Abstandshalter für ein System aus optischen Linsen.

Optische Linsen kommen zum Einsatz in einer Vielzahl optischer Geräte, beispielsweise in Fernrohren und -gläsern, Mikroskopen, Endoskopen und anderen Sehrohren wie Technoskopen, Periskopen und dergleichen.

Optische Linsen sind in den genannten Anwendungsgebieten in der Regel in einem Schaft nacheinander, aneinander anliegend oder mit Abstand zueinander als ein Linsensystem angeordnet. Insbesondere bei Endoskopen aber auch bei anderen Sehrohren werden Linsen oft in der Form von Stablinsen eingesetzt.

Dabei sind die Linsen eines Systems bezüglich des Schafts fixiert, indem die äußeren Linsen des Systems an ringförmigen Außenbereichen ihrer Stirnflächen durch eine Fixiereinrichtung gegeneinander verspannt werden. Eine örtliche Fixierung mehrerer Linsen zueinander kann erfolgen, indem die Linsen Scheitel-an-Scheitel aneinander angelegt werden oder Abstandshalter, die Linsen an ringförmigen Außenbereichen ihrer Stirnflächen berühren, zwischen je zwei benachbarten Linsen oder zwischen eine Linse und ein weiteres Bauteil des optischen Systems, z.B. die Fixiereinrichtung, festgepresst werden. Diese Abstandshalter werden aus metallischen Werkstoffen, insbesondere Messing, Monel, Neusilber oder Kupfer-Berylliumlegierungen, gefertigt.

In der Druckschrift DE 197 32 991.8 ist eine weitere Befestigungsmöglichkeit für Stablinsen eines Linsensystems in einem Schaft offenbart. Hier werden die Linsen an ihrer jeweils gewünschten Position gehalten, indem radial zwischen die Linse und den Schaft ein Schrumpfelement angeordnet ist.

Wie in der Druckschrift DE 197 50 685 vorgeschlagen, besteht auch die Möglichkeit, Linsen, nachdem sie in ihre gewünschte Position eingestellt und zentriert sind, in den Linsensystemschaft einzukleben.

In der Praxis üblich, weil sehr einfach, ist jedoch eine Fixierung und Positionierung der Linsen in Schaft über eine Schraubfixiereinrichtung und Abstandshalter.

Bei einer derartigen Montage der Linsen in den Schaft treten mechanische Belastungen zwischen Linsen und Abstandshaltern auf, z.B. Reibung an der Berührungsstelle Linse-Abstandshalter durch das Verdrehen von schraubbaren Fixiereinrichtungen, um die Abstandshalter gegen die ringförmigen Außenbereiche der Stirnflächen zu fixierender Linsen festzuspannen. Außerdem treten bei den genannten Linsensystemen Stoß- oder Biegestoßbelastungen zwischen Linsen und Abstandshaltern auf, wenn das entsprechende Linsensystem z.B. beim Herunterfallen auftrifft.

Außer mechanischen Belastungen kommen insbesondere in der medizinischen Endoskopie thermische Belastungen auf das Linsensystem vor. Beispielsweise beim Autoklavieren, einer Behandlung, um das Endoskop keimfrei zu machen, wird das Endoskop auf 134°C erhitzt. Da das Linsenmaterial Glas üblicherweise einen anderen Wärmedehnungskoeffizienten aufweist als die metallischen Materialien des Schafts, der üblicherweise aus Monel besteht, und von Abstandshaltern, kommt es zu Relativbewegungen zwischen benachbarten Linsen und Abstandshaltern wie auch Linsen und dem Schaft. Auch diese Bewegungen bedeuten Reibungskräfte, vor allem zwischen Linsen und Abstandshaltern.

Die Kräfte, die von Abstandshaltern auf Linsen aufgebracht werden, können diese leicht beschädigen, und zwar insbesondere, weil diese Kräfte nahe der Kante zwischen optisch wirksamer Fläche der Linse und ihrer radialen Umfangsfläche wirken, wobei Kantenbereiche des belasteten Materials besonders leicht ausbrechen. Selbst wenn eine Beschädigung außerhalb optisch wirksamer Bereiche der Linse auftritt, kann durch abgeriebene Partikel eine optisch wirksame Linsenfläche oder der Sichtkanal eingetrübt sein.

In US 4,303,306 ist ein Linsenbefestigungsbauteil aus Kunststoff offenbart, durch welches eine Linse in dem Endoskopschaft festlegbar ist.

US 5,601,525 offenbart darüber hinaus, dass Abstandshalter für Linsen in Endoskopschäften aus Kunststoff mit einem Additiv wie Glas gefertigt werden, so dass die innere Oberfläche der Abstandshalter rauh ist und keine reflektierende optische Wirkung zeigt.

In der Druckschrift DE 34 31 631 ist ein Abstandshalter dargestellt, als dessen Werkstoff auch Kunststoff, insbesondere Hartkunststoff, beschrieben ist.

Ausgehend von diesem Stand der Technik ist die Aufgabe der Erfindung, Abstandshalter anzugeben, bei denen die Gefahr einer Beschädigung der durch Abstandshalter beabstandeten Linsen durch die Kräfte, die von den Abstandshaltern auf die Linsen aufgebracht werden, geringer ist, wobei die mechanische und thermische Belastbarkeit erhalten bleiben soll.

Dies wird erfindungsgemäß durch einen Abstandshalter mit den Merkmalen von Patentanspruch 1 gelöst.

Vorteilhafte Ausgestaltungen und Weiterbildungen der Erfindung sind in den abhängigen Patentansprüchen offenbart.

Durch die Ausführung gemäß Patentanspruch 1 wird gewährleistet, dass Beschädigungen der Linsen möglichst vermieden werden. Der Abstandshalter kann als eine Abstandshülse bezüglich Form oder Materialaufbau so gestaltetsein, dass er auf Linsen an Berührungsflächen zwischen Abstandshalter und Linse bei Relativbewegung an diesen Berührungsflächen eine geringe kerbende Wirkung ausübt. Allerdings besteht auch ohne Relativbewegung eine zu minimierende kerbende Wirkung vom Abstandshalter auf die Berührungsfläche auf der Linse.

Im Fall mit und ohne Relativbewegung ist die kerbende Wirkung unter anderem abhängig von der Oberflächenrauhigkeit, Härte der Oberfläche und Reibzahl zwischen dem Abstandshalter und der Linse, Parameter, die durch die erfinderische Ausgestaltung des Abstandshalters minimiert werden.

Hierbei gewährleistet eine niedrige Reibzahl, dass geringe Kräfte bei Relativbewegung auftreten. Wenn die erfindungsgemäßen Abstandshalter allerdings in sich Relativbewegungen aufnehmen können, ist eine ausreichend hohe Reibzahl vorteilhaft, die bewirkt, dass trotz Relativbeschleunigung keine Relativbewegung auftritt, und somit Gleitreibungskräfte verhindert und die auf die Linsen wirkenden Kräfte auf Normal- und Haftkräfte begrenzt werden. Zur Vermeidung von störendem Abrieb an den Berührungsflächen zwischen Linsen und Abstandshaltern ist es vorteilhaft, wenn die Rauhigkeit der betreffenden Oberflächen gering ist.

Gemäß Anspruch 1 weist der Abstandshalter an den Berührungsflächen ein Material auf, das eine geringe Oberflächenhärte aufweist. Dabei kann der Abstandshalter auch nur an den Berührungsflächen dieses Material aufweisen, wobei es in Verbund mit mindestens einem weiteren Material, einem Trägermaterial ist. Dieses weitere Material ist vorzugsweise ein metallischer Werkstoff oder eine Keramik. Vorteilhafterweise hat von den Abstandshaltermaterialien zumindest das Trägermaterial einen Wärmedehnungskoeffizienten ähnlich dem des Endoskopschafts, so dass Relativbewegungen zwischen Schaft und den optischen Bauteilen minimiert werden.

Das Material mit geringer Oberflächenhärte und damit geringer kerbender Wirkung, das sich zumindest an den Linsenberührungsflächen befindet, kann auf dem Trägermaterial als ein Überzug, eine Beschichtung oder Lackierung ausgebildet sein. Alternativ kann das Berührungsflächenmaterial auch auf die axialen Enden des weiteren Materials beschränkt und dort an dem weiteren Material angebracht sein.

Die Erfindung schlägt für das Material mit geringer Oberflächenhärte Kunststoff, speziell einen thermoplastischen Kunststoff vor, der mindestens bis 134° C formstabil ist. Ein Kunststoff, speziell ein thermoplastischer, bietet Vorteile bezüglich Fertigungsgenauigkeit insbesondere bei kleinen Dimensionen, die z.B. für die Abstandshalter bei endoskopischen Optiken nötig sind.

Neben einer Verringerung der Oberflächenhärte, einer angepassten Reibzahl und einer feineren Oberflächenstruktur, jeweils gegenüber dem herkömmlichen metallischen Abstandshaltermaterial, z.B. Messing, kann eine verringerte kerbende Wirkung des Abstandshalters auf die Linse auch erzielt werden, indem die Anpresskraft des Abstandshalters auf die Linse durch in axialer Richtung elastische Ausgestaltung des Abstandshalters limitiert wird. Dabei sollte sich die Optik nach Verformung, z.B. bei einem Autoklaviervorgang, wieder in den ursprünglichen Aufbau zurückstellen, sich also bei den gegebenen Temperaturen rein elastisch, ohne plastischen Anteil, verhalten. Der Begriff elastisch ist dabei so zu verstehen, dass die Abstandshalter für das Zurückstellen in ihre Form vor der Wärmebehandlung ausreichend Zeit zur Verfügung haben (der nächste Einsatz des Stablinsensystems findet üblicherweise erst im Minuten- oder Stundenbereich nach z.B. einem Autoklavieren statt).

Die Elastizität kann dadurch bewirkt werden, dass der Abstandshalter so ausgeformt ist, dass die axialen Endflächen zueinander elastisch sind, also axiale Kraftspitzen durch Dämpfungsbewegung aufnehmen bzw. kappen können.

Außer axialen Belastungen nimmt die Abstandshülse einer Ausführungsform der Erfindung auch Torsionsbelastungen, wie sie z.B. beim Verschrauben zum Zusammenbau eines Linsensystems auftreten, und Biegebelastungen auf, die z.B. beim Herunterfallen eines ein Stablinsensystem aufweisenden Endoskops vorkommen können. Speziell in dem Fall, dass das Linsensystem ein Stablinsensystem ist, ist es vorteilhaft, dass Biegebelastungen von den Abstandshaltern aufgenommen werden, weil diese Biegebelastungen mit sehr großen Hebeln auf die Stablinsen wirken und deren Bruch hervorrufen können.

Die Elastizität kann auch durch geeignete Materialwahl des Abstandshalters gewährleistet werden, sowohl indem der Abstandshalter als Ganzes aus einem elastischen Material besteht, als auch durch eine Kombination aus elastischem Material und einem Trägermaterial, so dass axiale Elastizität gewährleistet ist.

Hierbei ist das Trägermaterial des Abstandshalters vorzugsweise metallisch oder ein Keramikwerkstoff.

Für das elastische Material schlägt die Erfindung Kunststoff vor, wobei ein thermoplastischer Kunststoff bevorzugt wird, vor allem aufgrund einfacher Herstellbarkeit, insbesondere in den bei medizinischen Endoskopen benötigten kleinen Dimensionen.

Dieser thermoplastische Kunststoff sollte bis mindestens 134°C formstabil sein, damit beim Autoklaviervorgang mit eben dieser Temperatur der Aufbau der Optik, speziell der Abstand der einzelnen Linsen, nicht verändert wird. Im Anwendungsfall wird vorgeschlagen, die Eignungstemperatur des Abstandshaltermaterials bezüglich Formstabilität bei Wärmeeinwirkung auf 137°C bzw. 139°C oder gar 142°C als Sicherheitswert zu erhöhen.

Auch verstärkte Kunststoffe sind insbesondere aufgrund der geforderten Wärmestandfestigkeit als Material für die Abstandshalter geeignet. Dabei muss aber durch geeignete Herstellverfahren gewährleistet sein, dass keine Verstärkungsfasern an den Berührungsflächen zwischen Linsen und Abstandshaltern zutage treten.

Ein Abstandshalter kann wie oben beschrieben auch durch seine Formgebung elastisch sein. Diese elastische Ausgestaltung kann durch mindestens eine Aussparung oder eine Verringerung in der Wandstärke des Abstandshalters bewirkt werden. Die Aussparung, oder Aussparungen wie auch ein oder mehrere Abschnitte verringerter Wandstärke können längs, quer oder diagonal zur Achse des Abstandshalters angeordnet sein.

Im Folgenden wird die Erfindung anhand von Ausführungsbeispielen beschrieben, welche durch die folgenden Figuren illustriert sind. Dabei zeigen:
- Fig. 1: ein Endoskop mit einem Stablinsensystem, das einen erfindungsgemäßen Abstandshalter aufweist;
- Fig. 2a: einen Ausschnitt des Stablinsensystems von Fig. 1;
- Fig. 2b: einen vergrößerten Ausschnitt von Fig. 2a zur Darstellung einer Berührungsstelle Linse-Abstandshalter mit dort auftretenden Rissen in der Linse;
- Figs. 3a, 3b und 3c: die Berührungsstelle Linse-Abstandshalter mit Prinzipdarstellung der Rauhigkeit der Abstandshalterstirnfläche, wobei in Fig. 3b die Rauhigkeit gering und in
- Fig. 3c: die Rauhigkeit hoch ist.
- Fig. 4: einen Materialverbund, bei dem ein Material als Beschichtung,Lackierung oder Überzug auf einem Trägermaterial angebracht ist, das elastisch ist und/oder eine geringe Oberflächenhärte aufweist;
- Figs. 5a und 5b: das Material mit hoher Elastizität und/oder geringer Oberflächenhärte als axiales Abschlusselement eines Trägermaterialstücks des Abstandshalters mit einer konischen Verbindungsfläche;
- Figs. 6a und 6b: das Material mit hoher Elastizität und/oder geringer Oberflächenhärte als axiales Abschlusselement eines Trägermaterialstücks des Abstandshalters mit einer abgestuften Verbindungsfläche;
- Figs. 7a und 7b: Ausgestaltungen von Abstandshaltern mit durch die Wandung gehenden Ausschnitten, die schraubenförmig bzw. längs bezüglich der Abstandshalterachse verlaufen;
- Figs. 8a und 8b: Ausgestaltungen des Abstandshalter mit Abschnitten verringerter Wandstärke;
- Fig. 9: eine Ausgestaltung des Abstandshalters mit durch die Wandung gehenden Ausschnitten, die quer zur Abstandshalterachse verlaufen;
- Figs. 10a und 10b: Ausgestaltungen des Abstandshalter aus einem elastischen Material und einem Trägermaterial mit durch die Wandung des Trägermaterials gehenden Ausschnitten, die längs bzw. schraubenförmig bezüglich der Abstandshalterachse verlaufen, wobei das elastische Material in die jeweiligen Zwischenräume eingepasst ist.

Im Folgenden werden Ausführungsbeispiele beschrieben, mit denen die Erfindung verwirklicht werden kann.

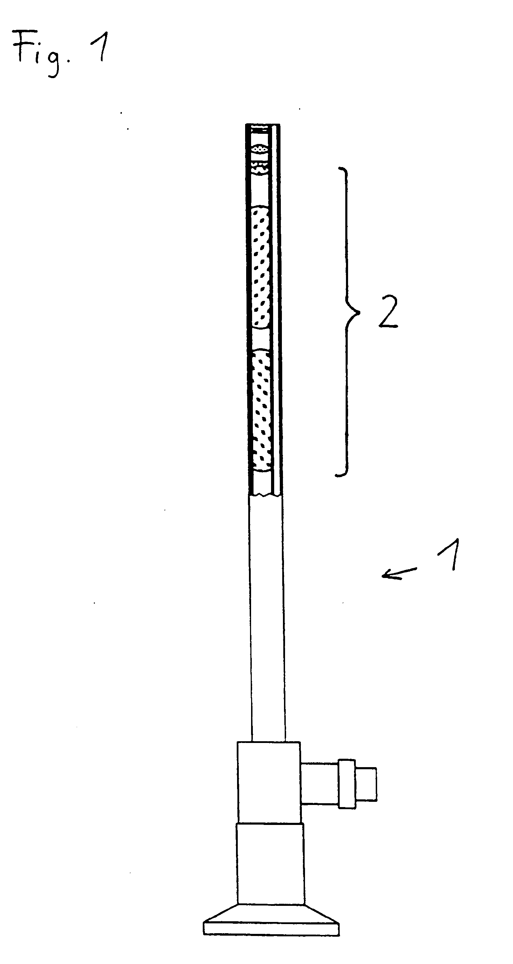

Fig. 1 zeigt ein Endoskop 1, in dem ein Stablinsensystem 2 eingesetzt ist.

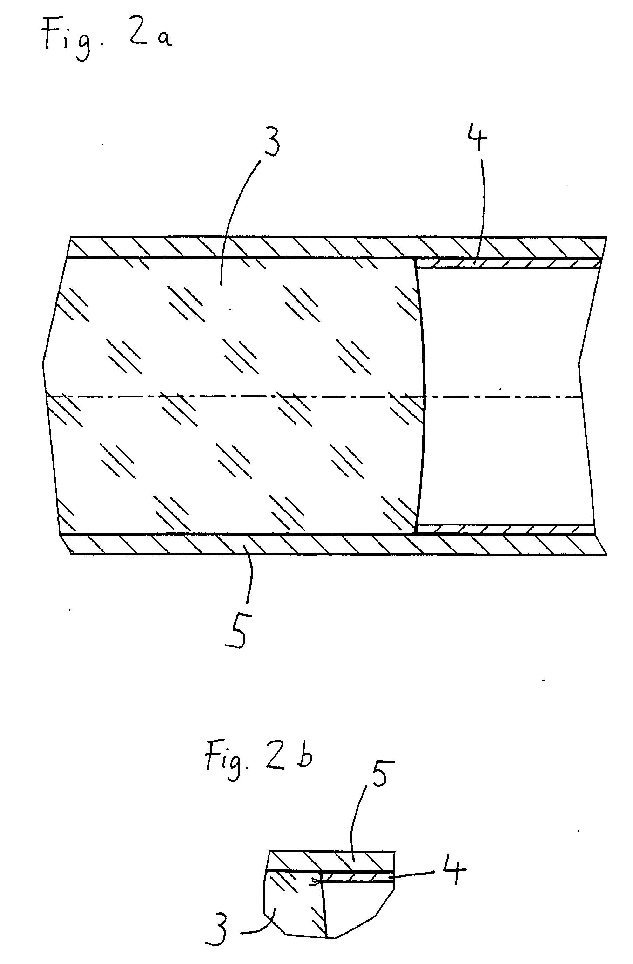

Ein Ausschnitt des Stablinsensystems 2 aus Stablinsen und Abstandshaltern ist in Fig. 2 näher dargestellt, wobei der gezeigte Ausschnitt nur eine Stablinse 3 und einen benachbarten Abstandshalter 4 zeigt. Der Abstandshalter 4 befindet sich im Stablinsensystem 2 zwischen zwei Stablinsen 3, und diese Bauteile werden durch Verschraubung aneinander gepresst. Dazu werden zwei hülsenförmige Schaftbauteile 5 verschraubt, so dass ein sich auf einer ersten Seite befindendes erstes Schaftbauteil 5 eine auf der ersten Seite gelegene erste äußere Linse axial mit Kraft zu einer zweiten Seite hin beaufschlagt und ein sich auf der zweiten Seite befindendes zweites Schaftbauteil 5 eine auf der zweiten Seite gelegene zweite äußere Linse axial mit Kraft zur ersten Seite hin beaufschlagt. Zwischen den mit Kraft beaufschlagten Linsen ist mindestens der eine Abstandshalter 4 angebracht, so dass das System 2 aus mindestens den zwei Stablinsen 3 und dem Abstandshalter 4 axial festgelegt gepresst ist.

Die Abstandshalter 4 sind an Stellen an die Linsen gedrückt, die sich an äußeren Kreisringen auf den optisch wirksamen Flächen 6 befinden.

Eine Beschädigung in Form von Rissen ist in Fig. 2b als Detailansicht eines Ausschnitts von Fig. 2a gezeigt.

Um eine derartige Beschädigung der Linse durch den sich dazu relativ bewegenden Abstandshalter zu verhindern, wird der Abstandshalter in diesem Ausführungsbeispiel aus einem Material mit geringer Oberflächenhärte und im gewünschten Temperaturbereich guter Elastizität gefertigt, dem thermoplastischen Kunststoff PEEK. Hierfür kann beispielsweise der Kunststoff mit der Werksbezeichnung TECAPEEK der Fa. Ensinger verwendet werden. Dieser weist - nicht graphitverstärkt - mit 140°C eine ausreichende Wärmeformbeständigkeit, und neben der geringen Oberflächenhärte mit dem verwendeten Linsenmaterial Glas einen guten Gleitverschleiß auf, so dass das reibende Abstandshaltermaterial eine gute Zeitstandsfestigkeit hat, und Verschmutzung bzw. Trübung des Sichtkanals des Linsensystems minimiert ist. Außer diesem PEEK ohne Graphitbeimengung ist auch ein PEEK mit einem geringen Graphitzusatz geeignet anwendbar. Ein vorteilhaftes Merkmal bei den genannten verwendeten Werkstoffen ist ihre dunkle bzw. schwarze Farbe. Durch dunkle oder matte optisch nicht wirksame Flächen werden unerwünschte Reflexionserscheinungen verhindert.

Alternativ zu PEEK schlägt die Erfindung den ebenso dunklen Kunststoff PPSU vor. Als weitere Kunststoffe für diesen Verwendungszweck sind beispielsweise die Thermoplasten Polysulfon (PSU), Polyethersulfon (PES), CAB, PEKEKK, PES und PSU zu nennen, die jedoch bezüglich der gewünschten Materialeigenschaften weniger geeignet als die vorgenannten Kunststoffe erscheinen.

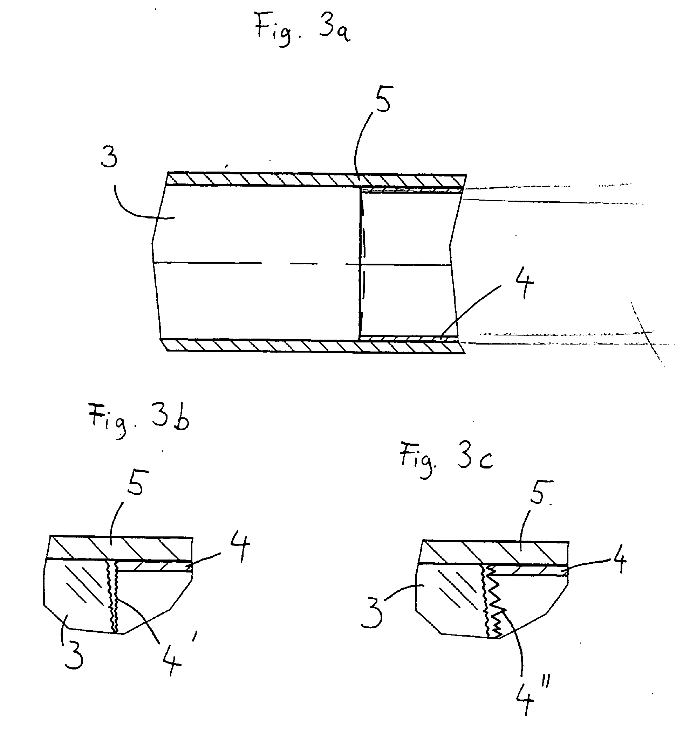

In Fig. 3a ist nochmals die Berührungsstelle zwischen einer Linse 3 und einem Abstandshalter 4 dargestellt. Die Figuren 3b und 3c zeigen jeweils den gleichen Ausschnitt im Detail, wobei Fig. 3b eine Prinzipdarstellung einer stirnseitigen Abstandshalteroberfläche 4' mit geringer Rauhigkeit und Fig. 3c eine Prinzipdarstellung einer stirnseitigen Abstandshalteroberfläche 4" mit hoher Rauhigkeit zeigt. Durch erhöhte Rauhigkeit der Berührungsflächen 4', 4" der Abstandshalter 4 an der Linse 3 wird, wenn die Spitzen der Abstandshalteroberfläche durch den Anpressdruck nicht abgeflacht werden, zum einen die kerbende und auch spanabhebende Wirkung auf der berührten Linsenfläche erhöht, zum anderen steigt hierbei im Allgemeinen auch die Reibzahl µ, wodurch die Reibungskraft erhöht wird, die scherend auf die Linsenoberflächenschicht bezüglich der nächsten Linsenschicht wirkt und Partikel aus dem Linsenmaterialverbund reißen kann.

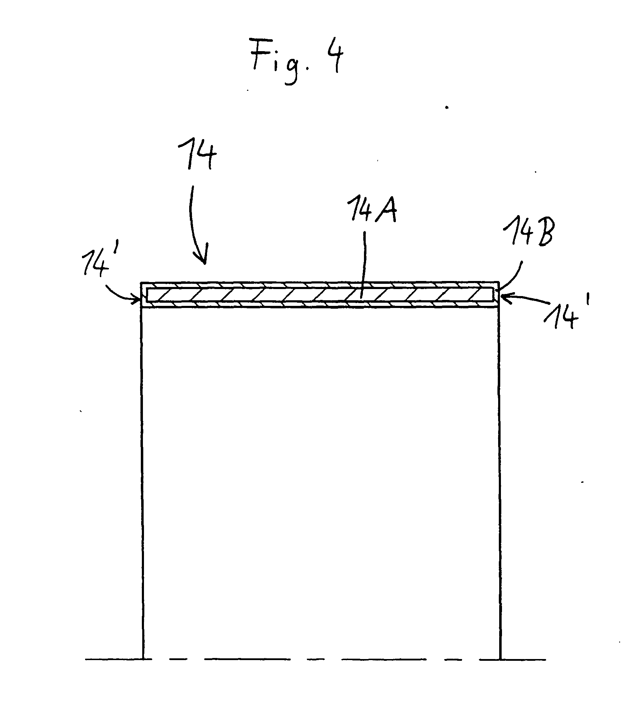

Bei einem weiteren Ausführungsbeispiel wird der Abstandshalter 14, der in Fig. 4 gezeigt ist, aus einem Materialverbund aus einem Trägermaterial 14A, hier eine Stahllegierung, und einer Beschichtung 14B aus einem Thermoplasten gefertigt. Hierdurch wird eine gewisse Elastizität, in Biege- und Axialrichtung, mehr aber in Tangentialrichtung, zwischen den stirnseitigen Endflächen 14' des Abstandshalters 14 gewährleistet. Wesentlicher ist hierbei aber die geringe Oberflächenhärte, idealerweise gepaart mit günstigen Reibeigenschaften durch geeignete Wahl des thermoplastischen Werkstoffs zwischen dem Abstandshalter 14 und der Linse 3.

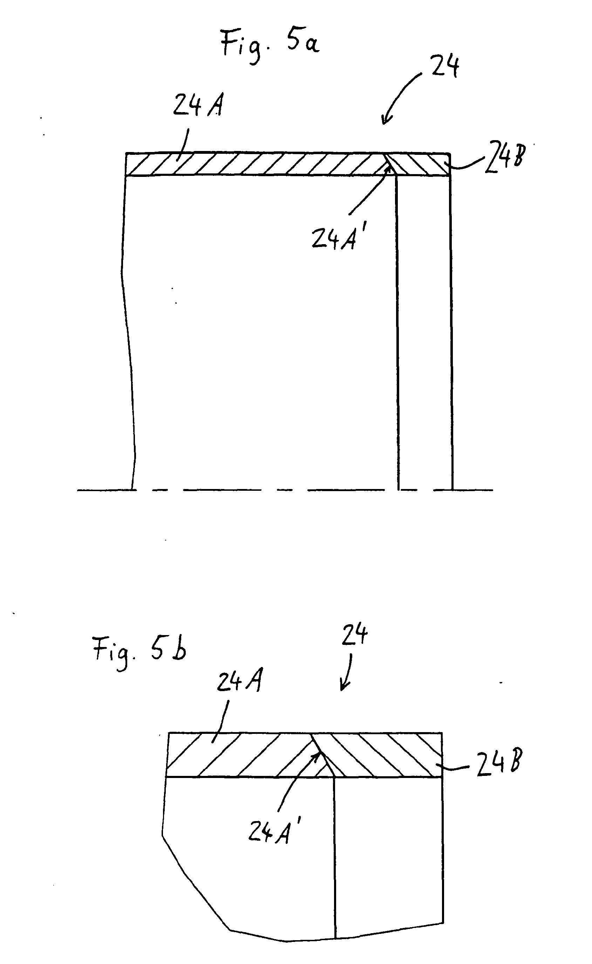

Eine andere Ausgestaltung des Abstandshalters 24 ist in Fig. 5a und der Detailansicht Fig. 5b von Fig. 5a offenbart. Hier wird an die axialen Enden eines Trägermaterials 24A, das z.B. eine Kupferlegierung sein kann, ein axiales Endstück 24B aus thermoplastischem Kunststoff angefügt, das ein im gewünschten Temperaturspektrum elastisches Material ist und durch seine geringe Härte und glatte stirnseitige Oberfläche eine geringe kerbende oder gar materialabhebende Wirkung an der durch diesen Abstandshalter 24 fixierten Linse zeigt. Die Verbindung zwischen dem Trägerrohr 24A und den axialen Endrohrstücken 24B kann durch Kleben oder Schweißen, z.B. Reibungsschweißen, erfolgen. In den Figuren 4b und 4c ist als Besonderheit noch dargestellt, dass das Trägerrohr 24A an seinen axialen Enden, von denen das rechte axiale Ende 24A' dargestellt ist, in einem bestimmten Winkel zur Abstandshalterachse umlaufend angespitzt ist und die Endrohrstücke 24B, von denen das rechte Endrohrstück 24B dargestellt ist, an die axialen Spitzenden 24A' des Trägerrohrs 24A angepasst angefast sind. Hierdurch wird eine gute Zentrierbarkeit der Endrohrstücke 24B bezüglich dem Trägerrohr 24A gewährleistet.

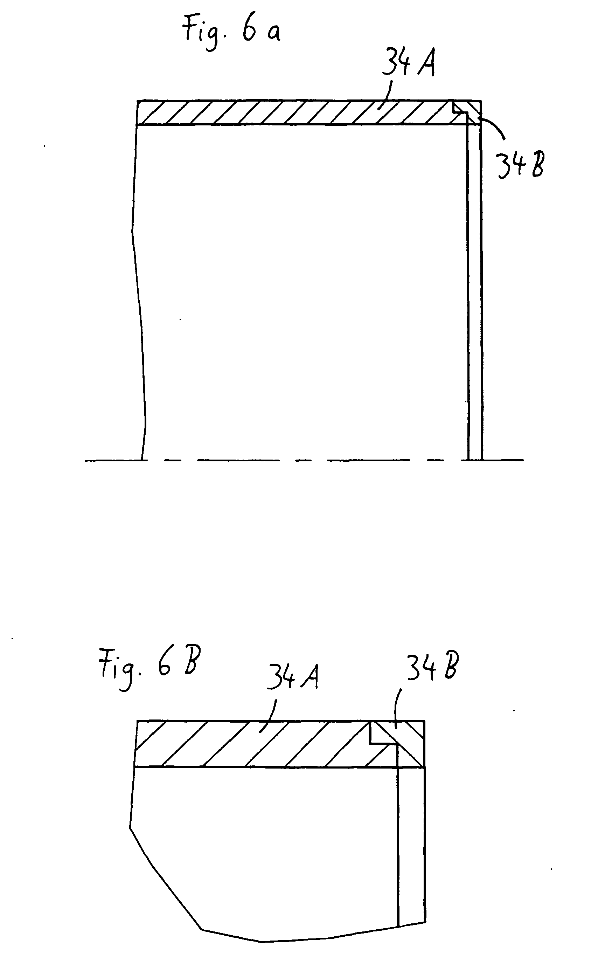

Auch bei der Ausgestaltung des Abstandshalters gemäß den Figuren 6a und 6b ist eine gute Zentrierbarkeit gewährleistet. Dies wird hier bewirkt, indem beim Trägerrohr 34A die axialen Enden im Außendurchmesser abgestuft verringert sind und bei den axialen Endrohrstücken 34B die den axialen Enden des Trägerrohrs 34A zugewandten Enden formangepasst an die Trägerrohrenden 34A im Innendurchmesser stufig erweitert sind. Natürlich ist auch eine Mischform der Ausführungen gemäß den Figuren 5a und 5b und den Figuren 6a und 6b denkbar, z.B. mit abgestuften Enden, die als solche konisch geformt sind.

Bei den zuletzt genannten Ausführungsbeispielen der Figuren 4 bis 6b ist das Trägerrohr 14A, 24A, 34A als Hauptbestandteil der Abstandshülse 14, 24, 34 jeweils aus einem mechanisch festen Werkstoff, vorzugsweise einem metallischen Werkstoff wie einer Stahl- oder Kupferlegierung, welcher z.B. bei einem Autoklaviervorgang eine Dehnung ähnlich der des Stablinsenschafts 5 aufweist, was zu geringeren Spannungen insbesondere an den Berührungsflächen der Linsen 3 mit den Abstandshaltern 4 des Stablinsensystems führt, wenn dieses sich im Autoklaven befindet.

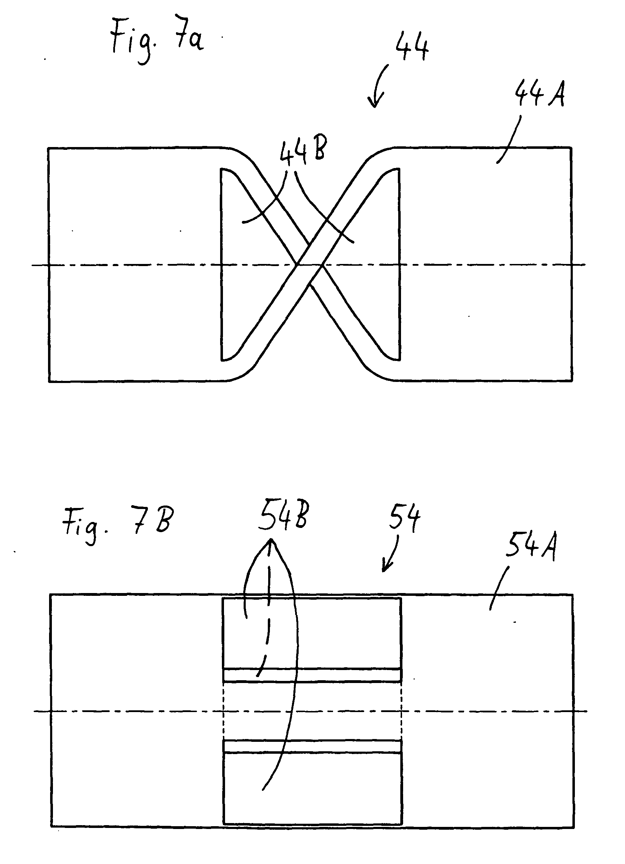

In den Figuren 7a und 7b sind Abstandshalter 44, 54 dargestellt, die aus einem herkömmlichen Abstandshalterwerkstoff, z.B. Kupfer, bestehen, deren Elastizität insbesondere in axialer Richtung aber dadurch geschaffen wird, dass das Abstandshaltermaterial im axial mittleren Bereich des Abstandshalters 44, 54, d.h. in Bereichen außerhalb der Berührungsstellen 44A, 54A mit der Linse, durch die gesamte Wandung gehende Ausschnitte 44B, 54B aufweist.

Gemäß dem Ausführungsbeispiel von Fig. 7a sind diese Ausschnitte 44B, im dargestellten Fall zwei Stück, spiralförmig ausgenommene Felder, die hier eine konstante Breite aufweisen, was aber nicht zwingend ist. Gemäß dem Ausführungsbeispiel von Fig. 7b haben die - im dargestellten Fall drei - Ausschnitte 54B die Form von axialen Zylindermantelstücken 54B. Bezüglich axialer Elastizität ist das Ausführungsbeispiel nach Fig. 7a dem nach Fig. 7b vorzuziehen, jedoch ist Zweiteres kostengünstiger herzustellen. Beide Ausführungen zeigen erhöhte Elastizität nicht nur axialer Richtung in sondern auch bezüglich Biegung sowie Torsion, was sich z.B. bei plötzlicher Biegebelastung, wenn ein Endoskop auf den Boden fällt, und bei Torsionsbelastung des Stablinsensystems, z.B. wenn beim Zusammenschrauben des Stablinsensystems hohe Reibung zwischen einer Linse 3 und einem Abstandshalter 4 auftritt, spannungsverringernd auswirkt.

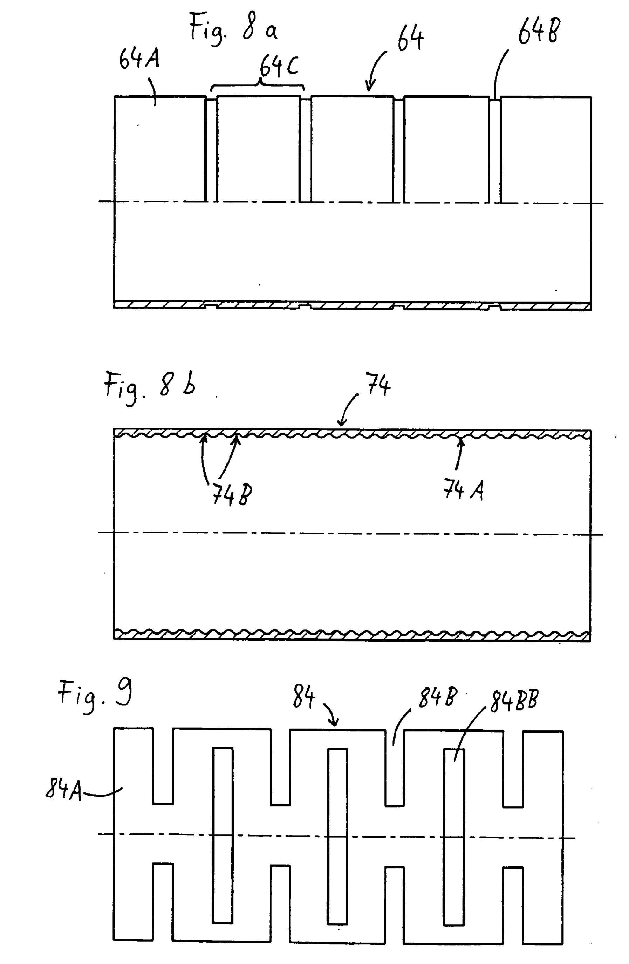

Weitere erfinderische Formgestaltungen von Abstandshaltern 64, 74 sind in den Figuren 8a und 8b dargestellt. Fig. 8a zeigt wie bei einem herkömmlichen Abstandshalterrohr in bestimmten, hier konstanten Abständen 64C umlaufende Wandstärkenverringerungen 64B angefertigt sind, d.h. Ringe 64B mit verringerter Wandstärke gegenüber Bereichen 64A mit der ursprünglichen Wandstärke. Im dargestellten Beispiel sind die Wandstärkeabtragungen von radial außen vorgenommen, was leichter herzustellen ist, jedoch sind die Wandstärkeabtragungen ebenso von der Innenseite denkbar.

Beim Ausführungsbeispiel nach Fig. 8b sind Wandstärkeverringerungen 74B als Wellentäler 74B im Längsschnitt der Abstandshülse 74 ausgeführt. Dies ist besonders leicht herzustellen, wenn diese Wellentäler 74B sich wendelförmig auf der Innenseite der Abstandshülse 74 erstrecken. Diese Ausgestaltung kann durch eine Art Gewindebohren hergestellt werden. Natürlich ist auch eine Ausrichtung der Wellentäler 74B und -berge 74A rein in Umfangsrichtung denkbar.

Das Ausführungsbeispiel gemäß Fig. 9 zeigt Ausschnitte 84B, 84BB ähnlich derer von Fig. 7b, wobei die Ausschnitte 84B, 84BB ihre Breitenrichtung parallel zur Abstandshalterachse haben. Dabei sind gemäß der Darstellung jeweils zwei Ausschnitte 84B, 84BB einander bezüglich der Abstandshalterachse gegenüberliegend in einem Abstandshalterquerschnitt vorgesehen. Zwei benachbarte Ausschnittpaare 84BB, 84B sind jeweils um 90° um die Abstandshalterachse verdreht angeordnet, so dass zusätzlich zur axialen Elastizität Biegeelastizität geschaffen werden kann, die um jede Achse konstant ist, die in einem Querschnitt des Abstandshalters durch die Abstandshalterachse legbar ist. Dies ist der Fall, wenn gleich viele Ausschnittpaare 84BB wie Ausschnittspaare 84B vorgesehen sind. Die axialen Endabschnitte einer Abstandshülse 84 dieser Ausführungsform haben wie die obigen Abstandshülsen mit Ausnahme der von Fig. 8b jeweils nicht materialabtragend bearbeitete Bereiche 44A, 54A, 64A, 84A der Berührungsflächen mit der jeweils benachbarten Linse.

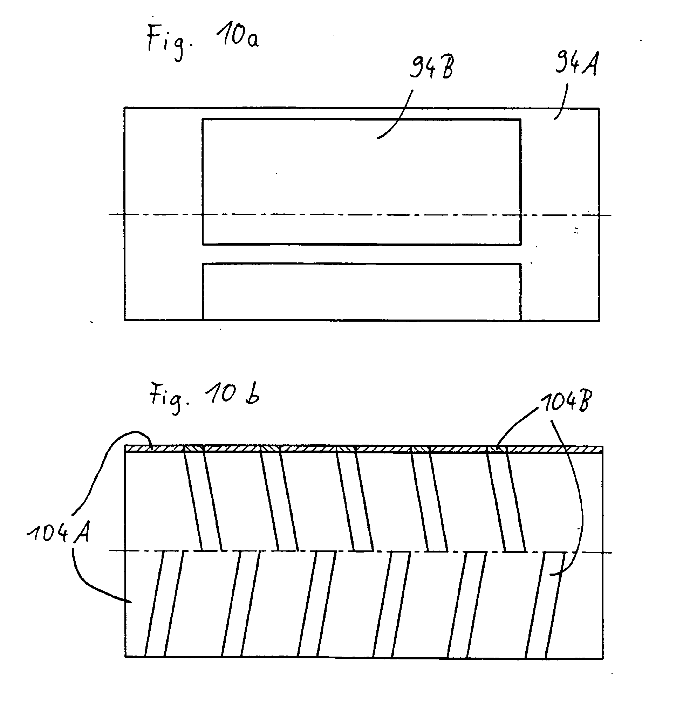

Außer der Ausführung der Abstandshalter aus elastischem Material 4 oder mit an den Enden oder als Überzug an Trägerwerkstoffen 14A, 24A, 34A angebrachten elastischen Werkstoffen 14B, 24B, 34B oder Abstandshaltern 44, 54, 64, 74, die aus an sich gering elastischem Material wie herkömmlich für Abstandshalter verwendeten Metallegierungen bestehen und deren Elastizität durch Abtragungen 64B, 74B oder Einschnitte 44B, 54B 84B, 84BB gewährleistet ist, ist auch eine Kombination gemäß den Figuren 10a und 10b denkbar, bei der ein an sich gering elastisches Trägermaterial 94A, 104A Ausschnitte 94B, 104B durch die gesamte Zylinderwand aufweist, welche mit einem elastischen Material 94B, 104B gefüllt sind. Als Werkstoffe für das Trägermaterial 94A, 104A und das elastische Material 94B, 104B sind die jeweils hierfür vorher genannten Materialien denkbar. Für diese Ausführungsformen zeigt Fig. 10a ein Beispiel, bei dem in axiale Zylindermantelausschnitte 94B des Trägermaterials 94A Zylindermantelstücke 94B aus elastischem Material eingefügt sind. Fig. 10b zeigt spiralförmige Ausschnitte 104B aus einem Trägerrohr 104A, wobei hier wieder in die Ausschnitte 104B elastisches Material 104B eingepasst ist. Ähnlich den Ausführungsbeispielen mit ausgeschnittenem Trägermaterial 44, 54, 84 ist auch hier Elastizität bezüglich Dehnung/Stauchung, Torsion und Biegung gewährleistet. Das elastische Material kann außerdem noch für Dämpfung beim Aufnehmen der jeweiligen Belastung sorgen.

Die dargestellten Ausführungsbeispiele dienen lediglich zum Beschreiben der Erfindung, der beanspruchte Schutzbereich ist jedoch nicht darauf beschränkt.

## Patentansprüche

1. Abstandshalter für Linsen zur Fixierung von Linsen in einem Endoskopschaft, **dadurch gekennzeichnet, dass** der Abstandshalter (4, 14, 24, 34, 44, 54, 64, 74, 84, 94, 104) aus einem Materialverbund aus einem Kunststoff mit geringer Oberflächenhärte und mindestens einem metallischen oder keramischen Trägermaterial besteht und an den Berührungsflächen zwischen dem Abstandshalter (4, 14, 24, 34, 44, 54, 64, 74, 84, 94, 104) und einer Linse (3) den Kunststoff aufweist.

2. Abstandshalter nach Anspruch 1, **dadurch gekennzeichnet, dass** das Trägermaterial den Wärmeausdehnungskoeffizienten des Endoskopschafts aufweist.

3. Abstandshalter nach einem der Ansprüche 1 bis 2, **dadurch gekennzeichnet, dass** der Kunststoff ein Überzug, eine Beschichtung oder Lackierung auf dem Trägermaterial ist.

4. Abstandshalter nach einem der Ansprüche 1 bis 3, **dadurch gekennzeichnet, dass** der Abstandshalter (4, 14, 24, 34, 44, 54, 64, 74, 84, 94, 104) nur an den Berührungsflächen den Kunststoff aufweist.

5. Abstandshalter nach einem der Ansprüche 1 bis 4, **dadurch gekennzeichnet, dass** der Kunststoff an den axialen Enden an dem Trägermaterial angefügt ist.

6. Abstandshalter nach einem der Ansprüche 1 bis 5, **dadurch gekennzeichnet, dass** der Abstandshalter (44; 54; 64; 74; 84; 94; 104) derart elastisch ausgestaltet ist, dass die Kraft, die er an den Berührungsflächen auf eine Linse (3) ausübt, limitiert ist.

7. Abstandshalter nach Anspruch 6, **dadurch gekennzeichnet, dass** der Abstandshalter (44; 54; 64; 74; 84; 94; 104) eine Ausformung aufweist, die bewirkt, dass seine axialen Endflächen zueinander elastisch sind.

8. Abstandshalter nach Anspruch 6 oder 7, **dadurch gekennzeichnet, dass** die Form des Abstandshalters (44, 54, 64, 74, 84, 94, 104) mindestens eine Aussparung (44B, 54B, 84B, 84BB, 94B, 104B) oder eine Wandstärkenverringerung (64B, 74B) aufweist.

9. Abstandshalter nach Anspruch 8, **dadurch gekennzeichnet, dass** die mindestens eine Aussparung (44B, 54B, 84B, 84BB, 94B, 104B) oder Wandstärkenverringerung (64B, 74B) längs zur Achse des Abstandshalters (44, 54, 64, 74, 84, 94, 104) angeordnet ist.

10. Abstandshalter nach Anspruch 8, **dadurch gekennzeichnet, dass** die mindestens eine Aussparung (44B, 54B, 84B, 84BB, 94B, 104B) oder Wandstärkenveningerung (64B, 74B) quer zur Achse des Abstandshalters (44, 54, 64, 74, 84, 94, 104) angeordnet ist.

11. Abstandshalter nach Anspruch 8, **dadurch gekennzeichnet, dass** die mindestens eine Aussparung (44B, 54B, 84B, 84BB, 94B, 104B) oder Wandstärkenverringerung (64B, 74B) diagonal zur Achse des Abstandshalters (44, 54, 64, 74, 84, 94, 104) angeordnet ist.

12. Abstandshalter nach einem der Patentansprüche 6 bis 11, **dadurch gekennzeichnet, dass** der Abstandshalter (4, 24, 34, 94, 104) Material aufweist, das elastisch ist.

13. Abstandshalter nach Anspruch 12, **dadurch gekennzeichnet, dass** das elastische Material Kunststoff ist.

14. Abstandshalter nach Anspruch 13, **dadurch gekennzeichnet, dass** der Kunststoff ein mindestens bis 134°C formstabiler thermoplastischer Kunststoff ist.

15. Abstandshalter nach einem der Patentansprüche 1 bis 14, **dadurch gekennzeichnet, dass** die radiale Innenseite des Abstandshalters (4, 14, 24, 34, 44, 54, 64, 74, 84, 94, 104) dunkel oder matt ist.

16. Optisches System, **dadurch gekennzeichnet, dass** es Abstandshalter (4, 14, 24, 34, 44, 54, 64, 74, 84, 94, 104) gemäß einem der Patentansprüche 1 bis 15 aufweist.

17. Optisches System nach Patentanspruch 16, **dadurch gekennzeichnet, dass** es als Linsen (3) Stablinsen (3) aufweist.

18. Endoskop, **dadurch gekennzeichnet, dass** es ein optisches System (2) gemäß Patentanspruch 17 aufweist.

## Claims

1. Spacer for lenses for fixing lenses in an endoscope shaft, **characterized in that** the spacer (4, 14, 24, 34, 44, 54, 64, 74, 84, 94, 104) consists of a material composite made from a plastic of low surface hardness and at least one metallic or ceramic carrier material, and exhibits the plastic at the contact surfaces between the spacer (4, 14, 24, 34, 44, 54, 64, 74, 84, 94, 104) and a lens (3).

2. Spacer according to Claim 1, **characterized in that** the carrier material exhibits the coefficient of thermal expansion of the endoscope shaft.

3. Spacer according to one of Claims 1 to 2, **characterized in that** the plastic is a coat, a coating or finish on the carrier material.

4. Spacer according to one of Claims 1 to 3, **characterized in that** the spacer (4, 14, 24, 34, 44, 54, 64, 74, 84, 94, 104) exhibits the plastic only on the contact surfaces.

5. Spacer according to one of Claims 1 to 4, **characterized in that** the plastic is attached to the carrier material at the axial ends.

6. Spacer according to one of Claims 1 to 5, **characterized in that** the spacer (44; 54; 64; 74; 84; 94; 104) is configured elastically in such a way that the force which it exerts on a lens (3) at the contact surfaces is limited.

7. Spacer according to Claim 6, **characterized in that** the spacer (44; 54; 64; 74; 84; 94; 104) has a formation as a result of which its axial end surfaces are elastic with respect to one another.

8. Spacer according to Claim 6 or 7, **characterized in that** the form of the spacer (44, 54, 64, 74, 84, 94, 104) exhibits at least one cutout (44B, 54B, 84B, 84BB, 94B, 104B) or a reduction in wall thickness (64B, 74B).

9. Spacer according to Claim 8, **characterized in that** the at least one cutout (44B, 54B, 84B, 84BB, 94B, 104B) or a reduction in wall thickness (64B, 74B) is arranged along the axis of the spacer (44, 54, 64, 74, 84, 94, 104).

10. Spacer according to Claim 8, **characterized in that** the at least one cutout (44B, 54B, 84B, 84BB, 94B, 104B) or a reduction in wall thickness (64B, 74B) is arranged transverse to the axis of the spacer (44, 54, 64, 74, 84, 94, 104).

11. Spacer according to Claim 8, **characterized in that** the at least one cutout (44B, 54B, 84B, 84BB, 94B, 104B) or a reduction in wall thickness (64B, 74B) is arranged diagonally relative to the axis of the spacer (44, 54, 64, 74, 84, 94, 104).

12. Spacer according to one of Patent Claims 6 to 11, **characterized in that** the spacer (4, 24, 34, 94, 104) exhibits material which is elastic.

13. Spacer according to Claim 12, **characterized in that** the elastic material is plastic.

14. Spacer according to Claim 13, **characterized in that** the plastic is a thermoplastic polymer which is dimensionally stable at least as far as 134°C.

15. Spacer according to one of Patent Claims 1 to 14, **characterized in that** the radial inner side of the spacer (4, 14, 24, 34, 44, 54, 64, 74, 84, 94, 104) is dark or matt.

16. Optical system **characterized in that** it has spacers (4, 14, 24, 34, 44, 54, 64, 74, 84, 94, 104) in accordance with one of Patent Claims 1 to 15.

17. Optical system according to Patent Claim 16, **characterized in that** it has rod lenses (3) as lenses (3).

18. Endoscope **characterized in that** it has an optical system (2) in accordance with Patent Claim 17.

## Revendications

1. Entretoise pour lentilles pour la fixation de lentilles dans une tige endoscopique, **caractérisée en ce que** l'entretoise (4, 14, 24, 34, 44, 54, 64, 74, 84, 94, 104) se compose d'un composé de matériaux constitué d'une matière plastique à faible dureté de surface et d'au moins un matériau porteur métallique ou céramique et présente la matière plastique au niveau des surfaces de contact entre l'entretoise (4, 14, 24, 34, 44, 54, 64, 74, 84, 94, 104) et une lentille (3).

2. Entretoise selon la revendication 1, **caractérisée en ce que** le matériau porteur présente le coefficient de dilatation thermique de la tige endoscopique.

3. Entretoise selon l'une des revendications 1 à 2, **caractérisée en ce que** la matière plastique est un enrobage, un revêtement ou un vernissage appliqué sur le matériau porteur.

4. Entretoise selon l'une des revendications 1 à 3, **caractérisée en ce que** l'entretoise (4, 14, 24, 34, 44, 54, 64, 74, 84, 94, 104) ne présente la matière plastique qu'au niveau des surfaces de contact.

5. Entretoise selon l'une des revendications 1 à 4, **caractérisée en ce que** la matière plastique est accolée au niveau des extrémités axiales sur le matériau porteur.

6. Entretoise selon l'une des revendications 1 à 5, **caractérisée en ce que** l'entretoise (44 ; 54 ; 64 ; 74 ; 84 ; 94 ; 104) présente une configuration élastique de sorte que la force qu'elle exerce sur une lentille (3) au niveau des surfaces de contact est limitée.

7. Entretoise selon la revendication 6, **caractérisée en ce que** l'entretoise (44 ; 54 ; 64 ; 74 ; 84 ; 94 ; 104) présente une forme qui a pour effet que ses surfaces d'extrémité axiales sont élastiques l'une par rapport à l'autre.

8. Entretoise selon la revendication 6 ou 7, **caractérisée en ce que** la forme de l'entretoise (44, 54, 64, 74, 84, 94, 104) présente au moins un creux (44B, 54B, 84B, 84BB, 94B, 104B) ou une réduction de l'épaisseur de la paroi (64B, 74B).

9. Entretoise selon la revendication 8, **caractérisée en ce que** l'au moins un creux (44B, 54B, 84B, 94B, 104B) ou la réduction de l'épaisseur de la paroi (64B, 74B) est disposé le long de l'axe de l'entretoise (44, 54, 64, 74, 84, 94, 104).

10. Entretoise selon la revendication 8, **caractérisée en ce que** l'au moins un creux (44B, 54B, 84B, 84BB, 94B, 104B) ou la réduction de l'épaisseur de la paroi (64B, 74B) est disposé transversalement par rapport à l'axe de l'entretoise (44, 54, 64, 74, 84, 94, 104).

11. Entretoise selon la revendication 8, **caractérisée en ce que** l'au moins un creux (44B, 54B, 84B, 84BB, 94B, 104B) ou la réduction de l'épaisseur de la paroi (64B, 74B) est disposé diagonalement par rapport à l'axe de l'entretoise (44, 54, 64, 74, 84, 94, 104).

12. Entretoise selon l'une des revendications 6 à 11, **caractérisée en ce que** l'entretoise (4, 24, 34, 94, 104) présente un matériau élastique.

13. Entretoise selon la revendication 12, **caractérisée en ce que** le matériau élastique est une matière plastique.

14. Entretoise selon la revendication 13, **caractérisée en ce que** la matière plastique est un thermoplastique qui est indéformable jusqu'à au moins 134 °C.

15. Entretoise selon l'une des revendications 1 à 14, **caractérisée en ce que** le côté intérieur radial de l'entretoise (4, 14, 24, 34, 44, 54, 64, 74, 84, 94, 104) est foncé ou mat.

16. Système optique, **caractérisé en ce qu'**il présente une entretoise (4, 14, 24, 34, 44, 54, 64, 74, 84, 94, 104) selon l'une des revendications 1 à 15.

17. Système optique selon la revendication 16, **caractérisé en ce que** ses lentilles (3) sont des lentilles en barreau (3).

18. Endoscope, **caractérisé en ce qu'**il présente un système optique (2) selon la revendication 17.
